(19) Europäisches Patentamt
European Patent Office
Office européen des brevets

(11) **EP 4 686 912 A1**

(12) **EUROPEAN PATENT APPLICATION**

(43) Date of publication:
**04.02.2026 Bulletin 2026/06**

(21) Application number: **25180928.1**

(22) Date of filing: **05.06.2025**

(51) International Patent Classification (IPC):
**G01C 19/58** (2006.01)    **G01C 19/64** (2006.01)
**G01P 15/093** (2006.01)    **G01V 7/00** (2006.01)

(52) Cooperative Patent Classification (CPC):
**G01C 19/58; G01C 19/64; G01P 15/093**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024 JP 2024123481**

(71) Applicants:
• **JAPAN AVIATION ELECTRONICS INDUSTRY,
LIMITED**
**Shibuya-ku**
**Tokyo 150-0043 (JP)**
• **INSTITUTE OF SCIENCE TOKYO**
**Tokyo 152-8550 (JP)**

(72) Inventors:
• **HOSOYA, Toshiyuki**
**Tokyo, 150-0043 (JP)**
• **TANAKA, Atsushi**
**Tokyo, 150-0043 (JP)**
• **SATO, Tomoya**
**Tokyo, 152-8550 (JP)**
• **KOZUMA, Mikio**
**Tokyo, 152-8550 (JP)**

(74) Representative: **MERH-IP Matias Erny Reichl
Hoffmann**
**Patentanwälte PartG mbB**
**Paul-Heyse-Straße 29**
**80336 München (DE)**

(54) **ATOM WAVE INTERFEROMETER**

(57)    Influences of an environmental magnetic field on an atom wave interferometer is to be suppressed. An atom wave interferometer includes an atomic beam source, a first Raman light generation unit, a second Raman light generation unit, a third Raman light generation unit, and a detector. The atomic beam source emits atoms with zero nuclear spin in a first metastable state. The first Raman light splits the first metastable state into the first and a second metastable state. The second Raman light inverts the first metastable state and the second metastable state. The third Raman light splits the first metastable state into the first and the second metastable state and splits the second metastable state into the first and the second metastable state. The detector detects a result of superposing the atoms in the two second metastable states split by the third Raman light.

FIG. 7

**Description**

TECHNICAL FIELD

The disclosed technology relates to a Mach-Zehnder-type atom wave interferometer using an atomic beam.

BACKGROUND ART

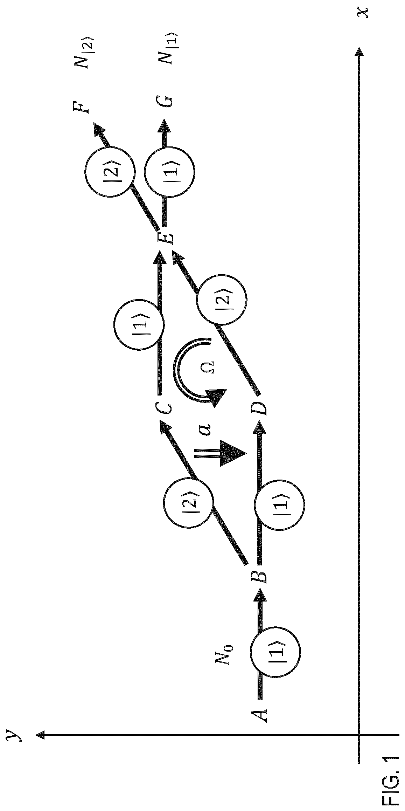

Atom wave interferometers that use atomic waves to form Mach-Zehnder interferometers are known (Non-Patent Literature 1: T. L. Gustavson, PRECISION ROTATION SENSING USING ATOM INTERFEROMETRY, A DISSERTATION SUBMITTED TO THE DEPARTMENT OF PHYSICS AND THE COMMITTEE ON GRADUATE STUDIES OF STANFORD UNIVERSITY, 2000). FIG. 1 schematically illustrates the atom wave interferometer.

An atomic wave in a quantum state |1> that has been incident from position A is split into the quantum state |1> and a quantum state |2> at position B. Hereinafter, "quantum state" will be simply abbreviated as "state" .

A path is closed by inverting the states at positions C and D, the states are each split further at position E, and state |1> are superposed in the E →G direction, and state |2> are superposed in the E→F direction, to cause interference.

If an atom acquires a phase difference $\Delta\phi$ in a path BCE and a path BDE, and let the number of atoms that are incident from position A be $N_0$, the number of atoms in state |1> detected at position G and the number of atoms in state |2> detected at position F are as follows:

$$N_{|1\rangle} = \frac{N_0}{2}(1 + \cos\Delta\phi) \qquad (1)$$

$$N_{|2\rangle} = \frac{N_0}{2}(1 - \cos\Delta\phi) \qquad (2)$$

$$\Delta\phi = \phi_a + \phi_\Omega + \phi_B + \dots \quad (3)$$

where $\phi_a$ represents a phase derived from an acceleration, $\phi_\Omega$ represents a phase derived from an angular velocity, and $\phi_B$ represents a phase derived from an environmental magnetic field.

The atom wave interferometer can detect the difference $\Delta\phi$, which is the difference in the phase acquired by an atomic wave along each of the two paths, by measuring $N_{|1>}$ or $N_{|2>}$.

The phase difference $\Delta\phi$ acquired by the atomic wave includes components that are proportional to the acceleration a and the angular velocity $\Omega$ of a system including the atom wave interferometer, and it is thus possible to use the atom wave interferometer as an accelerometer and a gyroscope by extracting corresponding component. The atom wave interferometer has been expected to be applied as a next-generation high-end inertial sensor.

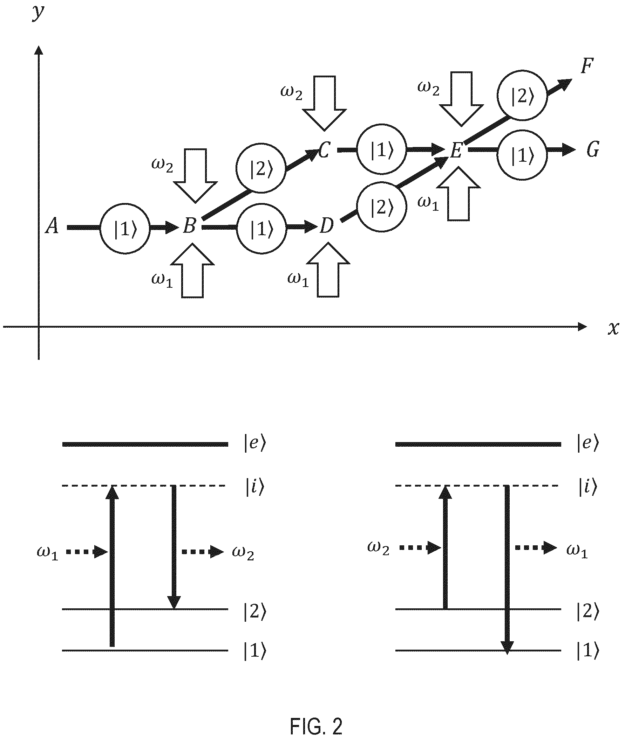

The mainstream type of atom wave interferometer is constructed using stimulated Raman transition between hyperfine states of alkali atoms. FIG. 2 illustrates levels used in stimulated Raman transition and how state splitting and state inversion of atomic waves are achieved by Raman light.

Alkali atoms have hyperfine structure levels |1> and |2> in a ground state. The alkali atoms are irradiated with light with angular frequencies $\omega_1$ and $\omega_2$ to stimulate Raman transition. |i> is a virtual level.

An atomic beam in state |1> is incident from position A in a positive direction of an x axis.

At position B, the light with the angular frequency $\omega_1$ is applied in a positive direction of a y axis, and the light with the angular frequency $\omega_2$ is applied in a negative direction of the y axis, thereby half of the quantum mechanical state of the alkali atom is transitioned to |2>. As a result, the alkali atom in state |2> acquire a momentum $(h/2\pi c)(\omega_1 + \omega_2)$ in the positive direction of the y axis. Here, h represents a Planck constant, and c represents a light speed. Hereinafter, mixed light applied at position B will be referred to as $\pi/2$ pulse first Raman light.

At C and D, light with the angular frequency $\omega_1$ is applied in the positive direction of the y axis, and light with the angular frequency $\omega_2$ is applied in the negative direction of the y axis, thereby inverting state |1> into state |2> and inverting state |2> into state |1>. At the time of the transition from state |2> to state |1> at position C, the alkali atoms lose the momentum $(h/2\pi c)(\omega_1 + \omega_2)$ in the y-axis direction and advance along the x axis. The alkali atoms transitioned from state |1> to state |2> at position D acquire the momentum $(h/2\pi c)(\omega_1 + \omega_2)$ in the positive direction of the y axis. Hereinafter, the mixed light applied at positions C and D will be referred to as $\pi$ pulse second Raman light.

At E, the light with the angular frequency $\omega_1$ is applied in the positive direction of the y axis, the light with the angular frequency $\omega_2$ is applied in the negative direction of the y axis, thereby half of the state |1> after the above inversion is transitioned to state |2>. Also, half of the state |2> after the above inversion is transitioned to state |1>.

The atom in state |1> after passing the path BCE and the atom in state |1> after passing the path BDE are caused to interfere in the E → G direction, and the atom in state |2> after passing the path BCE and the atom in state |2> after passing the path BDE are caused to interfere in the E → F direction. Hereinafter, the mixed light applied at position E will be referred to as π/2 pulse third Raman light.

Note that the atom wave interferometer using Raman transition (two-photon transition) adjusts a frequency difference between $\omega_1$ and $\omega_2$ in detuning for controlling a probability of state transition. While absolute frequency stabilization is in a stage of basic research, relative frequency stabilization is relatively easy, and there are many products available, for example, optical frequency combs.

SUMMARY OF THE INVENTION

When considering application to a high-end sensor such as gyroscope and accelerometer for inertial navigation, it is expected that the sensor will be used in environments where there are many external disturbances such as environmental magnetic fields, and it is important to suppress these effects.

[Conventional method 1]

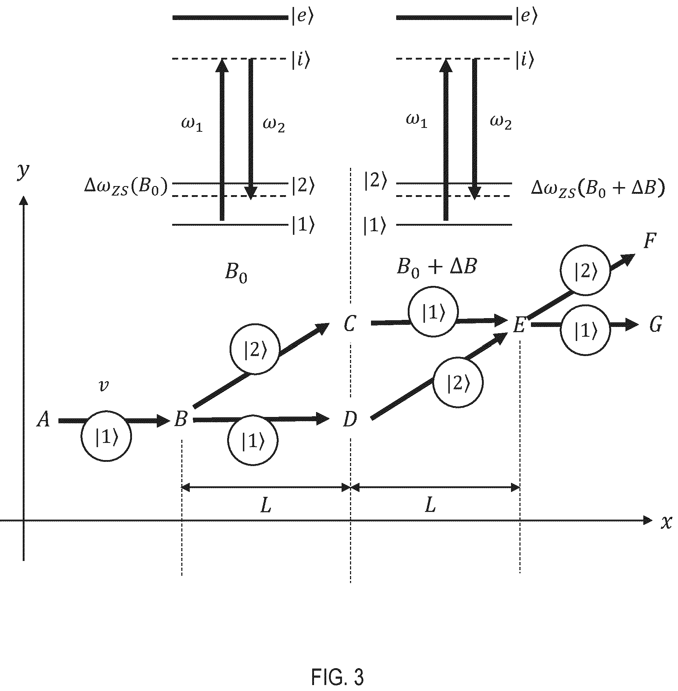

The atom wave interferometer constructed using stimulated Raman transition between hyperfine states of alkali atoms described above suppresses energy level fluctuations due to an environmental magnetic field (first-order Zeeman shift) using an energy state of zero magnetic quantum number that is insensitive to the magnetic field in the first order. However, since the hyperfine structures derives from a nuclear magnetic moment, a level shift that is proportional to the square of the magnetic field intensity (second-order Zeeman shift) occurs, and a phase difference due to the level shift occurs. This will be explained using FIG. 3.

A quantum mechanical state (phase) of an atom evolves over time in accordance with energy of the atom and a difference of frequencies of two laser beams that stimulate Raman transition ($\Delta\omega_{laser} = \omega_1 - \omega_2$). When the energy of the atom changes due to the environmental magnetic field, the phase that the atom acquires changes. Let $\Delta\omega_{ZS}(B)$ be the second-order Zeeman shift in the energy level of the hyperfine structures under the environmental magnetic field B, and in a case where an energy difference between state |1> and state |2> and the relative frequencies of the two laser beams (Raman light) coincide, a magnetic field component $\phi_B$ of $\Delta\phi$ is given by the following formula.

$$\phi_B = \int_{path2} \Delta\omega_{ZS}(B)\, dt - \int_{path1} \Delta\omega_{ZS}(B)\, dt \quad \cdots (4)$$

where path 1 is a line integral related to the path B → C → E, and path 2 is a line integral related to the path B → D → E.

For simplicity, a case where a first half (before position C and position D) of the magnetic field applied to the atom wave interferometer is $B_0$ and a second half (after position C and position D) of the magnetic field is $B_0 + \Delta B$ will be considered. Let $\alpha$ be a coefficient of a magnetic field response (a response to the square of the magnetic field) of the hyperfine structures, $\phi_B$ can be estimated as follows.

$$\int_{path1} \Delta\omega_{ZS}(B)\, dt = \phi_{BC} + \phi_{CE} = \alpha B_0^2 \cdot \frac{L}{v} \quad \cdots (5)$$

$$\int_{path2} \Delta\omega_{ZS}(B)\, dt = \phi_{BD} + \phi_{DE} = \alpha(B_0 + \Delta B)^2 \cdot \frac{L}{v} \quad \cdots (6)$$

$$\phi_B = \frac{\alpha L}{v}((B_0 + \Delta B)^2 - B_0^2) \cong \frac{2\alpha L B_0 \Delta B}{v} \quad \cdots (7)$$

In detecting an acceleration and/or an angular velocity from the phase of the atom wave interferometer, the phase $\phi_B$ that derives from the magnetic field gradient is added as a systematic error. This cannot be distinguished from a change in phase due to the acceleration and/or the angular velocity, and the environmental magnetic field becomes a factor to reduce measurement accuracy.

[Conventional method 2]

Since the atoms with zero nuclear spin do not undergo second-order Zeeman shift, if an atom wave interferometer can be constructed using those atoms, the effects of environmental magnetic fields can be suppressed. On the other hand, since atoms with no nuclear spin do not have hyperfine structures either, it is not possible to construct the atom wave interferometer that uses Raman transition between the hyperfine states.

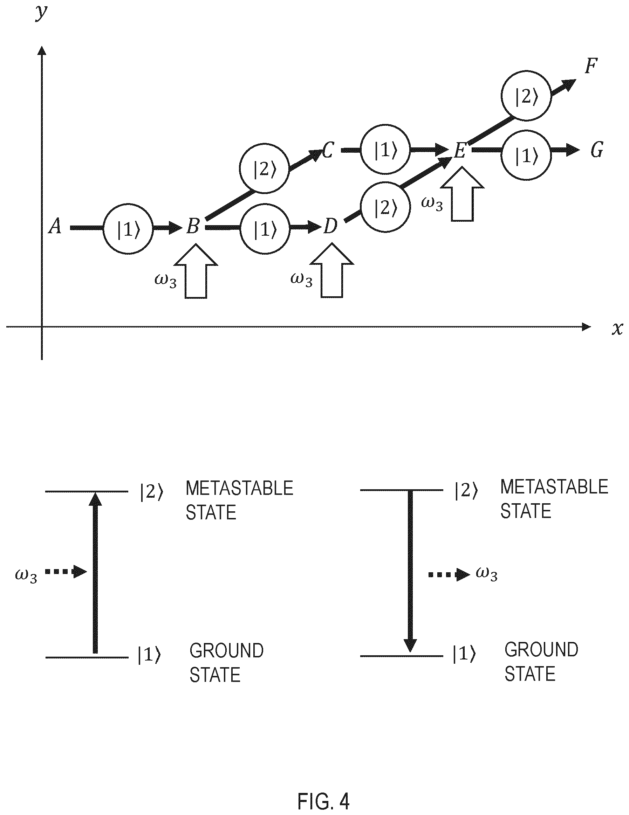

A method has also been proposed to use ultra-narrow linewidth optical transition in alkaline-earth atoms with zero nuclear spin to couple the ground state and metastable state to construct an atom wave interferometer (Non-Patent Literature 2: N. Marliere, "DESIGN AND SETUP OF AN ATOM INTERFEROMETER GYROSCOPE USING A STRONTIUM THERMAL BEAM", Master Thesis submitted to the University of Oklahoma, 2022). This will be explained using FIG. 4.

An atomic beam in state |1> is incident in the positive direction of the x axis from position A.

At position B, light with an angular frequency $\omega_3$ is applied in the positive direction of the y axis to transition half of the quantum-mechanical state of the incident atom to |2>. As a result, the alkaline-earth atoms in state |2> acquire a momentum in the positive direction of the y axis.

At position D, state |1> is transitioned to state |2> completely by $\omega_3$.

At position C, radiation of $\omega_3$ is induced, and state |2> transitions to state |1> completely.

At position E, half of the state |1> from C to E is transitioned to state |2>, and state |2> after passing the path BCE and state |2> after passing the path BDE are caused to interfere in the E $\rightarrow$ F direction. Also, half of the state |2> from D to E is transitioned to state |1>, and state |1> after passing the path BCE and state |1> after passing the path BDE are caused to interfere in the E $\rightarrow$ G direction.

Similarly to the conventional method 1, fluctuations in energy level due to an environmental magnetic field (first-order Zeeman shift) is suppressed using an energy state of zero magnetic quantum number. Although a level shift that is proportional to the square of intensity of the magnetic field (diamagnetic effect) and a phase difference due to it occurs even in a case where the ground state and the metastable state are used, an energy shift due to the diamagnetic effect is about four to five orders of magnitude less than an energy shift due to the second-order Zeeman effect. Therefore, it is possible to significantly reduce influences of the environmental magnetic field as compared with the conventional method 1.

However, to control atomic wave by on one-photon transition described above, $\omega_3$ needs to be adjusted in detuning to control the probability of transition between states. The change in $\omega_3$ directly becomes a change in the detuning. The disadvantage is that if the absolute frequency of the laser is not stable, it becomes difficult to control the atomic wave. In order to stabilize the absolute frequency of laser light with high accuracy, a complicated mechanism such as an atomic clock is needed in addition to the atom wave interferometer.

[Conventional method 3]

The conventional methods 1 and 2 relate to interferometers using superposition of an internal state and a momentum state. It is also possible to produce an interferometer using only a momentum state of atoms (Patent Literature 1: Japanese Patent Application Laid-Open No. 2020-91239). In this case, since the atomic waves propagate in the same internal state (energy level), a change in internal state due to influences of an environmental magnetic field, if any, uniformly occurs in two paths and thus does not affect interference.

However, a high quality atomic beam with narrow transverse momentum width is required in this method. In order to obtain the high quality atomic beam, a complicated mechanism such as utilization of ultra-narrow linewidth optical transition to extract atoms with narrow transverse momentum width as in Patent Literature 1 is needed, and implementation is thus difficult.

In order to solve the above problems, an atom wave interferometer according to the disclosed technology includes an atomic beam source, a first Raman light generation unit, a second Raman light generation unit, a third Raman light generation unit, and a detector.

The atomic beam source emits atoms with zero nuclear spin in a first metastable state.

The first Raman light generation unit generates first Raman light that splits the atom in the first metastable state into the first metastable state and a second metastable state.

The second Raman light generation unit generates second Raman light that inverts the atom in the first metastable state after the splitting into the second metastable state and inverts the atom in the second metastable state after the splitting into the first metastable state.

The third Raman light generation unit generates third Raman light that splits the atom in the first metastable state after the inversion into the first metastable state and the second metastable state and splits the atom in the second metastable state after the inversion into the first metastable state and the second metastable state.

The detector detects a result of superposing the atom in the two second metastable states split by the third Raman light.

By constructing the atom wave interferometer using atoms with zero nuclear spin and two-wavelength Raman transition between the metastable states, it becomes possible to eliminate influences of the second-order Zeeman shift, which cannot be avoided by the existing atom wave interferometer that uses Raman transition between hyperfine states of alkali atoms, , and it becomes possible to suppress influences of an environmental magnetic field on the atom wave interferometer by four to five orders of magnitude. Furthermore, it is possible to construct the atom wave interferometer through stabilization of relative frequencies using an optical frequency comb, which is easily realized as compared with the conventional solutions requiring stabilization of absolute frequencies that needs a complicated mechanism such as an atomic clock.

BRIEF DESCRIPTION OF THE DRAWINGS

FIG. 1 is a diagram schematically illustrating an atom wave interferometer;

FIG. 2 is a diagram for explaining an atom wave interferometer of a type constructed using stimulated Raman transition between hyperfine states;

FIG. 3 is a diagram for explaining a case where the atom wave interferometer of the type constructed using stimulated Raman transition between hyperfine states is placed in a magnetic field gradient;

FIG. 4 is a diagram for explaining an atom wave interferometer of a type constructed using ultra-narrow linewidth optical transition;

FIG. 5 is a diagram for explaining energy levels used in an atom wave interferometer according to the disclosed technology;

FIG. 6 is a diagram for explaining control of an atomic beam in the atom wave interferometer according to the disclosed technology;

FIG. 7 is a functional block diagram of an atom wave interferometer according to a first embodiment;

FIG. 8 is a diagram for explaining control and detection of an atomic beam in the atom wave interferometer according to the first embodiment;

FIG. 9 is a diagram for explaining control and detection of an atomic beam in an atom wave interferometer according to a second modification; and

FIG. 10 is a functional block diagram of the atom wave interferometer according to the second modification.

DETAILED DESCRIPTION OF THE EMBODIMENTS

Hereinafter, an embodiment of the disclosed technology will be described in detail. Note that components with the same functions will be denoted by the same numbers and description will not be repeated.

[Energy levels]

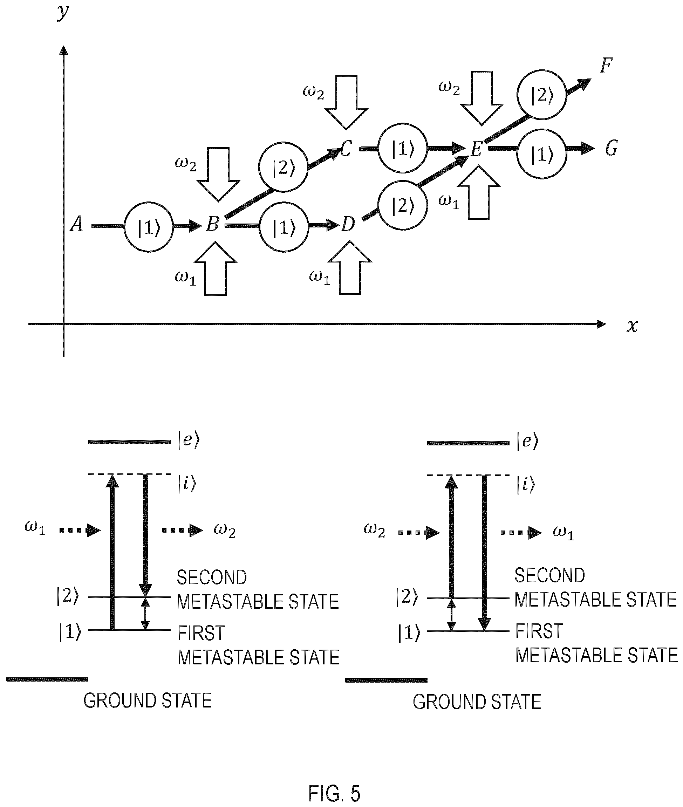

First, energy levels used in an atom wave interferometer according to the disclosed technology will be described using FIG. 5.

According to the disclosed technology, an internal state and a momentum of atomic waves are controlled using stimulated Raman transition using a first metastable state and a second metastable state.

Since two-photon transition is adopted, it is possible to use two-wavelength with stable relative frequencies.

[Atomic species]

Next, atomic species suitable for Raman transition between metastable states will be described.

<Essential conditions>

(1) Nuclear spin is zero.
If nuclear spin is zero, second-order Zeeman shift does not occur.
(2) A lifetime T of the metastable state is longer than the time it takes for an atom to pass through the interferometer.

Let the entire length of the interferometer be L, and a velocity of atoms be v, a passing time L/v is about 1 msec, and T > 1 msec has to be satisfied.

<Control conditions>

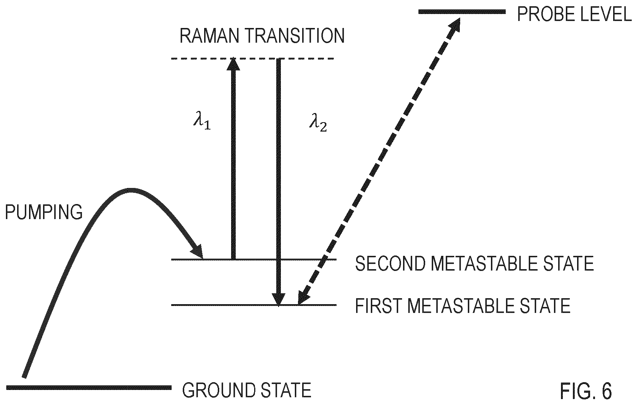

Control of an atomic beam by the atom wave interferometer according to the disclosed technology will be described using FIG. 6.

First, atoms in the ground state are excited to the second metastable state by pumping light.

Raman transition is stimulated between the second metastable state and the first metastable state, and the internal state and the momentum state of the atomic waves are controlled.

An interference result of the first metastable state is detected by probe light.

In order to realize the above control, it is desirable that the atomic species meet the following conditions.

(3) Easy pumping from the ground state to the metastable state.

(4) Have closed optical transition that allows probing the metastable state.

(5) Wavelengths $\lambda_1$ and $\lambda_2$ of Raman light shall be close to each other.

FIRST EMBODIMENT

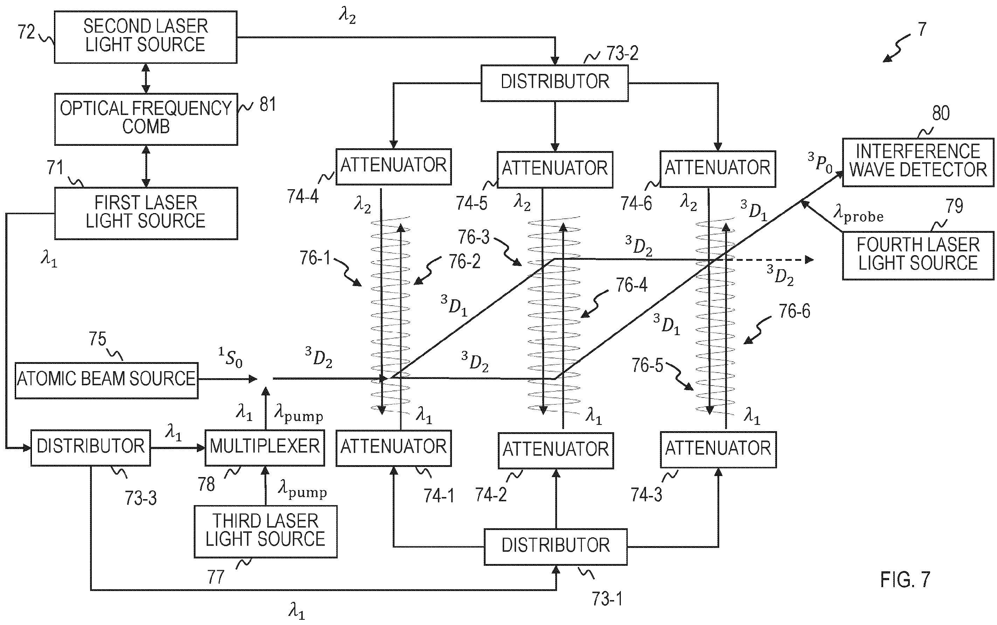

FIG. 7 is a functional block diagram illustrating a configuration example of an atom wave interferometer 7 according to a first embodiment. The atom wave interferometer 7 includes a first laser light source 71, a second laser light source 72, distributors 73-1 to 73-3, attenuators 74-1 to 74-6, an atomic beam source 75, a third laser light source 77, a multiplexer 78, a fourth laser light source 79, an interference wave detector 80, and an optical frequency comb 81.

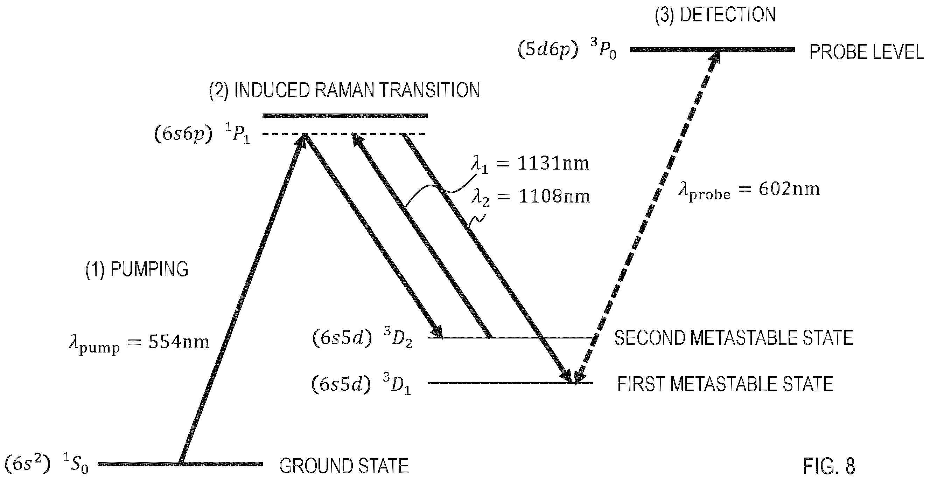

FIG. 8 is a diagram for explaining an example of control of atomic waves by the atom wave interferometer 7. Ba is used as an atomic species, $(6s5d)^3D_1$ is used as a first metastable state, $(6s5d)^3D_2$ is used as a second metastable state, and $(6s6p)^1P_1$ is used as a virtual level to induce Raman transition. The wavelength $\lambda_1$ of Raman light absorbed/emitted in transition between the virtual level and the second metastable state is 1131 nm, and the wavelength $\lambda_2$ of Raman light absorbed/emitted in transition between the virtual level and the first metastable state is 1108 nm.

Hereinafter, description will be given using FIG. 7 and FIG. 8.

<Formation of Raman light>

Raman light for splitting and inverting states of atomic waves is formed. Relative frequencies of the first laser light source 71 and the second laser light source 72 are stabilized by the optical frequency comb 81.

Laser light (wavelength $\lambda_1$) generated by the first laser light source 71 is distributed into two portions by the distributor 73-3, one of the outputs is distributed into three portions by the distributor 73-1, and intensities are adjusted by the attenuators 74-1, 74-2, and 74-3, thereby obtaining laser light 76-2, 76-4, and 76-6 with a wavelength $\lambda_1$. The other output of the distributor 73-3 is used for pumping of the atomic beam, which will be described later.

Laser light (wavelength $\lambda_2$) generated by the second laser light source 72 is distributed into three portions by the distributor 73-2, and intensities are adjusted by the attenuators 74-4, 74-5, and 74-6, thereby obtaining laser light 76-1, 76-3, and 76-5 with the wavelength $\lambda_2$.

Mixed light of the laser light 76-1 and 76-2 is $\pi/2$ pulse first Raman light, mixed light of the laser light 76-3 and 76-4 is $\pi$ pulse second Raman light, and mixed light of the laser light 76-5 and 76-6 is $\pi/2$ pulse third Raman light.

<Pumping of atomic beam>

A Ba atomic beam in a state $(6s^2)^1S_0$ is ejected from the atomic beam source 75. Pumping light with a wavelength $\lambda_{pump}$ = 554 nm is output from the third laser light source 77, the multiplexer 78 multiplexes the pumping light with light with the wavelength $\lambda_1$ output from the distributor 73-3 and irradiates the Ba atomic beam in state $(6s^2)^1S_0$ to excite Ba atoms to the second metastable state $((6s5d)^3D_2)$.

<Stimulated Raman transition>

$\pi/2$ pulse first Raman light splits the Ba atom in state $^3D_2$ into states $^3D_2$ and $^3D_1$.

$\pi$ pulse second Raman light inverts states of the Ba atom after the splitting.

$\pi/2$ pulse third Raman light splits state $^3D_2$ after the inversion into $^3D_2$ and $^3D_1$ and splits state $^3D_1$ after the inversion into $^3D_1$ and $^3D_2$.

<Detection>

The two states $^3D_1$ split by the $\pi/2$ pulse third Raman light are superposed to interfere.

The resultant of the interference is irradiated with probe light with a wavelength of 602 nm from the fourth laser light source 79 to excite it to $(Sd6p)^3P_0$, and the interference wave detector 80 detects fluorescent light emitted by the Ba atoms.

As represented by Formulae (1) and (2), intensity of the detected fluorescent light is proportional to the rate of the Ba atoms in the $^3D_1$ state. A phase difference $\Delta\phi$ between path 1 and path 2 is calculated from the rate of the Ba atoms in the $^3D_1$ state, and an acceleration and/or an angular velocity occurring in the interferometer are calculated from $\Delta\phi$.

The first embodiment has been described hitherto.

FIRST MODIFICATION

Although $^3D_1$ and $^3D_2$ of Ba are used as the two metastable states in the first embodiment, two levels of Ba arbitrarily selected from $^3D_1$, $^3D_2$, $^3D_3$, and $^1D_2$ may be used as the metastable states.

As the atomic species, boson isotopes of alkaline earth or alkaline-earth-like atoms may be used instead of Ba.

For example, any of Mg, Ca, and Sr may be used as an atomic species, and as for metastable states, two levels arbitrarily selected from $^3P_0$, $^3P_1$, and $^3P_2$ may be used as the metastable states.

Alternatively, any of Cd, Hg, Yb may be used as an atomic species, and $^3P_0$ and $^3P_2$ may be used as two metastable states.

Pumping light, Raman light, and probe light changed in accordance with the selected atomic species and two levels may be used.

The first modification has been described hitherto.

SECOND MODIFICATION

In the first embodiment, the two metastable states are used as levels of the stimulated Raman transition. Instead, two levels, namely a ground state and a metastable state may be used. Although this implementation is unfavorable compared to the case where two metastable states are used with regard to the condition "(5) Wavelengths $\lambda_1$ and $\lambda_2$ of Raman light shall be close to each other", this implementation has a merit that the interferometer configuration can be simplified because the lower level of Raman transition is in the ground state and pumping of the atomic beam is unnecessary.

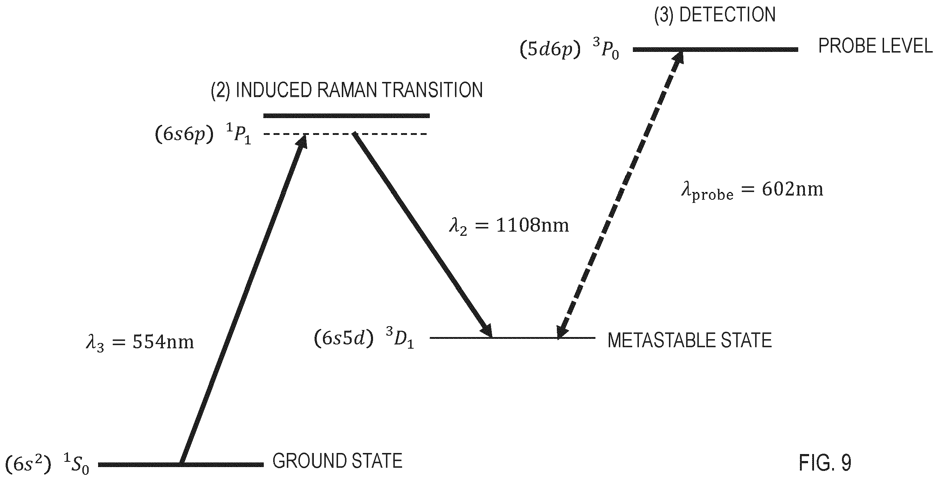

FIG. 9 is a diagram for explaining control of the atomic wave in a case where Ba is used as an atomic species, the ground state is $(6s^2)^1S_0$, and the metastable state is $(6s5d)^3D_1$. The wavelength $\lambda_3$ of Raman light absorbed/emitted in transition between a virtual level and the ground state is 554 nm, and the wavelength $\lambda_2$ of Raman light absorbed/emitted in transition between the virtual level and the metastable state is 1108 nm.

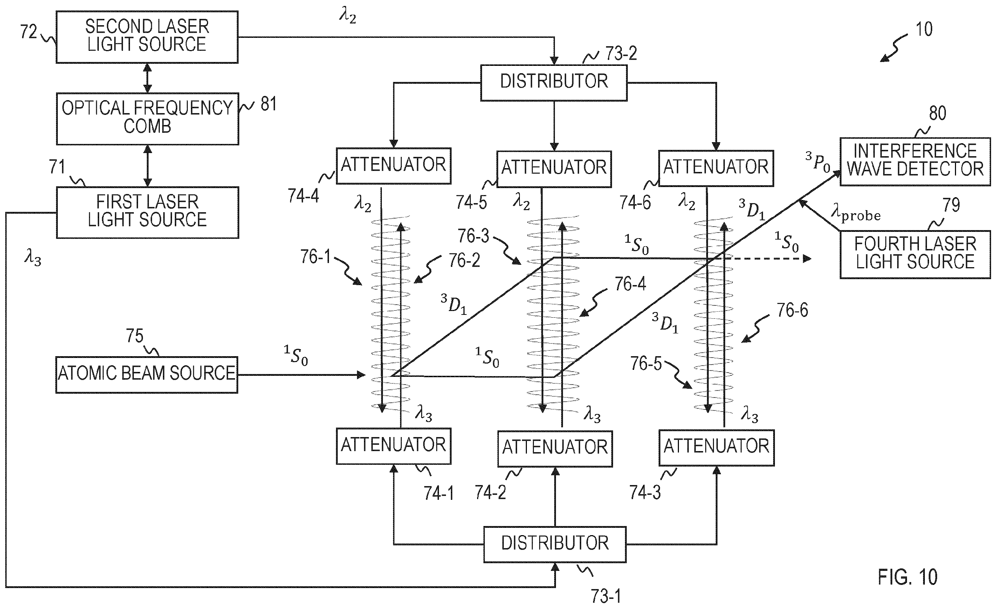

FIG. 10 is a functional block diagram illustrating a configuration example of an atom wave interferometer 10 according to the second modification. Although the configuration of the atom wave interferometer 10 is substantially similar to that in FIG. 7, which is the functional block diagram of the first embodiment, the atomic beam is not pumped, and the distributor 73-3, the third laser light source 77, and the multiplexer 78 are thus not needed.

Hereinafter, description will be given using FIG. 9 and FIG. 10.

<Formation of Raman light>

Similarly to the first embodiment, $\pi/2$ pulse first Raman light, $\pi$ pulse second Raman light, $\pi/2$ pulse third Raman light are formed. Note that, in second modification, an output of the first laser light source 71 is $\lambda_3 = 554$nm and is input directly to the distributor 73-1.

<Stimulated Raman transition>

$\pi/2$ pulse first Raman light splits a Ba atom in state $^1S_0$ to states $^1S_0$ and $^3D_1$.

$\pi$ pulse second Raman light inverts states of Ba atom after the splitting.

$\pi/2$ pulse third Raman light splits state $^3D_1$ after the inversion into $^3D_1$ and $^1S_0$ and splits state $^1S_0$ after the inversion into $^1S_0$ and $^3D_1$.

<Detection>

The two states $^3D_1$ split by the $\pi/2$ pulse third Raman light are superposed to interfere.

The resultant of the interference is irradiated with probe light with a wavelength of 602 nm from the fourth laser light source 79 to excite it to $(5d6p)^3P_0$, and the interference wave detector 80 detects fluorescent light emitted by the Ba atoms.

The second modification has been described hitherto.

## Claims

1.  An atom wave interferometer comprising:

    an atomic beam source that emits atoms with zero nuclear spin in a first metastable state;
    a first Raman light generation unit that generates first Raman light that splits the atom in the first metastable state into the first metastable state and a second metastable state;
    a second Raman light generation unit that generates second Raman light, the second Raman light inverting the atom in the first metastable state after the splitting into the second metastable state and inverting the atom in the second metastable state after the splitting into the first metastable state;
    a third Raman light generation unit that splits the atom in the first metastable state after the inversion into the first metastable state and the second metastable state and splits the atom in the second metastable state after the inversion into the first metastable state and the second metastable state; and
    a detector that detects a result of superposing the atom in the two second metastable states split by the third Raman light.

2.  The atom wave interferometer according to Claim 1, wherein the atoms with zero nuclear spin are Ba, and two levels are selected from $^3D_1$, $^3D_2$, $^3D_3$, and $^1D_2$ as the first metastable state and the second metastable state.

3.  The atom wave interferometer according to Claim 2, wherein

    the atomic beam source excites the Ba atoms in a ground state to $^3D_2$ with light of 554 nm and light of 1131 nm to generate the atomic beam, and
    the detector detects atoms in $^3D_1$ with light of 602 nm.

4.  The atom wave interferometer according to Claim 1, wherein the atoms with zero nuclear spin are any of Mg, Ca, and Sr, and two levels are selected from $^3P_0$, $^3P_1$, and $^3P_2$ as the first metastable state and the second metastable state.

5.  The atom wave interferometer according to Claim 1, wherein the atoms with zero nuclear spin are any of Cd, Hg, and Yb, $^3P_0$ is the first metastable state while $^3P_2$ is the second metastable state, or $^3P_0$ is the second metastable state while $^3P_2$ is the first metastable state.

6.  An atom wave interferometer comprising:

    an atomic beam source that emits atoms with zero nuclear spin in a ground state;
    a first Raman light generation unit that generates first Raman light that splits the atom in the ground state into the ground state and a metastable state;
    a second Raman light generation unit that generates second Raman light, the second Raman light inverting the atom in the ground state after the splitting into the metastable state and inverting the atom in the metastable state after the splitting into the ground state;
    a third Raman light generation unit that splits the atom in the ground state after the inversion into the ground state and the metastable state and splits the atom in the metastable state after the inversion into the ground state and the metastable state; and
    a detector that detects a result of superposing the atom in the two metastable states split by the third Raman light.

7.  The atom wave interferometer according to Claim 6, wherein the atoms with zero nuclear spin are Ba, and the metastable state is $^3D_1$.

FIG. 1

FIG. 2

FIG. 3

EP 4 686 912 A1

FIG. 4

12

FIG. 5

RAMAN TRANSITION

PROBE LEVEL

$\lambda_1$ $\lambda_2$

PUMPING

SECOND METASTABLE STATE

FIRST METASTABLE STATE

GROUND STATE

FIG. 6

FIG. 7

EP 4 686 912 A1

(3) DETECTION

$(5d6p)\ ^3P_0$ — PROBE LEVEL

(2) INDUCED RAMAN TRANSITION

$(6s6p)\ ^1P_1$

$\lambda_1 = 1131nm$

$\lambda_2 = 1108nm$

$\lambda_{probe} = 602nm$

(1) PUMPING

$\lambda_{pump} = 554nm$

$(6s5d)\ ^3D_2$ — SECOND METASTABLE STATE

$(6s5d)\ ^3D_1$ — FIRST METASTABLE STATE

$(6s^2)\ ^1S_0$ — GROUND STATE

FIG. 8

FIG. 9

(3) DETECTION

$(5d6p)$ $^3P_0$ ⎯⎯⎯⎯ PROBE LEVEL

(2) INDUCED RAMAN TRANSITION

$(6s6p)$ $^1P_1$ - - - - - - -

$\lambda_{probe} = 602nm$

$\lambda_2 = 1108nm$

$\lambda_3 = 554nm$

$(6s5d)$ $^3D_1$ ⎯⎯⎯⎯ METASTABLE STATE

$(6s^2)$ $^1S_0$ ⎯⎯⎯⎯ GROUND STATE

EP 4 686 912 A1

FIG. 10

Europäisches
Patentamt

European
Patent Office

Office européen
des brevets

# EUROPEAN SEARCH REPORT

**Application Number**

EP 25 18 0928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Marliere Nathan: "DESIGN AND SETUP OF AN ATOM INTERFEROMETER GYROSCOPE USING A STRONTIUM THERMAL BEAM", Master Thesis, 1 January 2022 (2022-01-01), pages 1-80, XP093346007, Retrieved from the Internet: URL:shareok.org/server/api/core/bitstreams/cb8adfc1-d87f-4fe1-b781-c519463971de/content [retrieved on 2025-12-10] * the whole document * ----- | 1-7 | INV. G01C19/58 G01C19/64 G01P15/093 G01V7/00 |
| | | | TECHNICAL FIELDS SEARCHED (IPC) |
| | | | G01C G01P G01V |

The present search report has been drawn up for all claims

| Place of search | Date of completion of the search | Examiner |
|---|---|---|
| The Hague | 10 December 2025 | Faivre, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- JP 2020091239 A

**Non-patent literature cited in the description**

- **T. L. GUSTAVSON**. *PRECISION ROTATION SENSING USING ATOM INTERFEROMETRY, A DISSERTATION SUBMITTED TO THE DEPARTMENT OF PHYSICS AND THE COMMITTEE ON GRADUATE STUDIES OF STANFORD UNIVERSITY*, 2000

- DESIGN AND SETUP OF AN ATOM INTERFEROMETER GYROSCOPE USING A STRONTIUM THERMAL BEAM. **N. MARLIERE**. Master Thesis. University of Oklahoma, 2022